# DEMANDE DE BREVET EUROPEEN

(11) **EP 0 882 882 A1**
(43) Date de publication de la demande: **09.12.1998**
(21) Numéro de dépôt: 98401327.6
(22) Date de dépôt: 04.06.1998
(51) Int. Cl.: F02K 1/70

(54) **Inverseur de poussée de turboréacteur à portes formant écopes associées à une casquette amont mobile**

(30) Priorité: 05.06.1997 FR 9706941
(71) Demandeur: Hispano-Suiza Aérostructures, 76700 Gonfreville l'Orcher (FR)
(72) Inventeur: Gonidec, Patrick, 76290 Montivilliers (FR); Portal, Jean Fabrice Marcel, 76310 Ste Adresse (FR); Studer, Vincent Joseph Rodolphe, 76600 Le Havre (FR); Vauchel, Guy Bernard, 76610 Le Havre (FR)

(57) **Abrégé**

Un inverseur de poussée de turboréacteur comporte des portes creuses pivotantes (3), intégrées en jet direct dans le capotage extérieur de la nacelle et constituant en jet inversé des obstacles de déviation de flux en formant écopes. Une partie mobile formant casquette (23) est disposée, en jet direct, entre le bord amont de la porte (3) et la structure fixe amont (6) recouvrant la structure aval du cadre avant (8). La casquette amont (23) est articulée sur la structure fixe et associée à des moyens de commande, découvre, en inversion de poussée, la structure aval du cadre avant (8) qui présente une surface aérodynamique de guidage du flux inversé.

## Description

La présente invention concerne un dispositif d'inversion de poussée de turboréacteur à double flux. Le turboréacteur est équipé d'un conduit en arrière de la soufflante dont le but est de canaliser le flux secondaire dit froid, ce conduit est constitué d'une paroi interne qui entoure la structure du moteur proprement dite en arrière de la soufflante, et d'une paroi externe dont la partie amont vient en continuité du carter moteur qui entoure la soufflante. Cette paroi externe peut canaliser à la fois le flux secondaire et le flux primaire dans sa partie aval, et ceci en arrière de l'éjection du flux primaire, dit chaud, dans le cas de nacelle à flux mélangés ou à flux confluents par exemple, mais dans d'autre cas, la paroi externe ne canalise que le flux secondaire, dans le cas de nacelles dites à flux séparés.

Une paroi peut également caréner l'extérieur du moteur, c'est à dire l'extérieur du carter qui entoure la soufflante et l'extérieur de la paroi extérieure du conduit décrit ci-dessus, ceci dans le but de minimiser la trainée de l'ensemble propulsif. Ceci est notamment le cas pour des ensembles propulsifs rapportés sur l'extérieur d'aéronef, particulièrement lorsque ces ensembles propulsifs sont attachés sous les ailes ou à l'arrière du fuselage.

La demande de brevet français 96.09705 décrit un exemple de réalisation, illustré par la figure 1 des dessins joints, d'un inverseur de poussée à portes formant écopes, associé à un turboréacteur à double flux.

Le dispositif d'inversion est constitué d'un ensemble mobile et d'une structure fixe. L'ensemble mobile est constitué de portes creuses 3 formant une partie mobile 2 et constituant en position jet direct, une partie du capotage extérieur de la nacelle. La structure fixe est constituée d'une partie amont 6 en amont des portes, d'une partie aval 7 en aval des portes 3 et de poutres qui relient la partie amont 6 à la partie aval 7, la structure fixe réalisant elle aussi une partie du capotage extérieur.

Les portes 3 sont montées sur une circonférence du capotage extérieur et sont montées pivotantes dans une zone aval de leurs parois latérales sur les poutres reliant la partie aval 7 à la partie amont 6 du capotage extérieur situées de part et d'autre de ces portes, ces parois latérales relient la partie extérieure ou panneau externe 4 des portes 3, qui constitue une partie de la paroi extérieure de la nacelle à la partie intérieure 5 des portes 3 qui constitue une partie de la paroi extérieure du conduit.

La partie amont 6 de structure fixe comporte un cadre avant 8 qui peut servir de support aux moyens de commande des déplacements des portes 3, constitués par exemple par des vérins. Ces moyens de commande de déplacements des portes 3 peuvent de même être situés à d'autres endroits en périphérie de la porte 3 par exemple en aval de celle-ci. Dans ce cas c'est la structure aval 7 de structure fixe qui peut supporter les organes de commande.

En position activée, les portes 3 basculent de telle façon que la partie des portes situées en amont des pivots 9 vient obstruer plus ou moins totalement le conduit tout en dégageant un passage dans le capotage extérieur de manière à permettre au flux secondaire respectivement 13 et 14 d'être canalisé dans une direction centrifuge par rapport à l'axe du conduit d'une part dans le conduit ou tuyère 10 formé par la structure de la porte 3 et entre le bord de déviation et l'externe de la structure externe 4 de la porte 3 d'autre part. La partie aval des portes vient au voisinage de l'externe du capotage extérieur. L'angle de pivotement des portes est ajusté de manière à permettre le passage du flux et de manière à réduire fortement voire à supprimer la poussée de ce flux, et à générer une contre poussée en produisant une composante du flux dévié vers l'amont.

Le type d'inverseur de poussée décrit ci-dessus, pour des raisons de débattement de la porte imposées par des contraintes de dimensionnement aérodynamique du passage du flux dans les passages dégagés par la partie amont de la porte et le positionnement de la porte en jet inversé, présente une forme proéminente 12 en aval externe du cadre 8. Une zone d'eau morte 11 plus ou moins marquée, comme rencontré habituellement sur tous les concepts à portes traditionnels dans cette zone, réduit la section de passage du flux 14 tout en minimisant l'angle d'inversion du flux 14 vers l'avant de la nacelle. En effet cette zone morte 11 forme un bouchon aérodynamique qui réduit la section efficace du puits d'inversion.

Le fait que la section efficace de passage du flux d'inversion soit restreinte implique certaines réductions des performances aérodynamiques. L'obtention d'une longueur de puits efficace nécessite le recul du pivot 9 et l'augmentation de la longueur de la porte 3, ce qui réduit d'autant la section de sortie du flux 13 de la porte puisqu'en aval de la nacelle externe les lignes aérodynamiques se resserrent fortement. L'allongement de la porte 3 réduit son angle d'ouverture, ce qui diminue le dégagement de la section de sortie 15 de la porte 3 avec la casquette aval 16 de la structure fixe arrière 7. Enfin la position angulaire de la porte 3 en jet inversé étant plus réduite, celle-ci guide avec moins d'efficacité le flux d'inversion vers l'avant de la nacelle.

Certaines dispositions connues visant à améliorer les performances d'inversion ont en outre été proposées. Ainsi, US 3 605 411 est applicable à un concept à portes classiques. Il utilise un déflecteur sur la structure fixe en amont de la porte. Ce déflecteur doit déborder à l'extérieur de la nacelle pour faire bouclier au flux d'inversion dans le but d'empêcher une réingestion du flux par le moteur. De plus ce déflecteur est manoeuvré indépendamment de la porte.

FR-A-2 627 807 est applicable lui aussi à un concept à portes classiques comprenant une cavité créant des perturbations aérodynamiques dans la veine en jet direct. On prévoit un élément formant une lèvre placé à la base du bord de déviation permettant de lisser une partie de la veine externe qui manoeuvre en rotation pour venir se positionner dans le puits d'inversion et améliorer les performances d'inversion.

La demande de brevet français 96.15256 propose elle aussi une utilisation spécifique d'aubes associées au concept de portes classique pour améliorer les performances aérodynamique du concept. Pour pouvoir être placées, ces aubes nécessitent un environnement libre créé par la cavité de la porte.

Un des buts de l'invention est d'obtenir un accroissement des performances aérodynamiques des portes écopes, notamment lors du fonctionnement en inversion de poussée de l'inverseur, sans encourir les inconvénients des solutions connues antérieures.

Les buts sont atteints conformément à l'invention par un inverseur de poussée de turboréacteur, à portes formant écopes du type précité caractérisé en ce que une partie mobile formant casquette est disposée en jet direct entre le bord amont de la porte et la structure fixe amont, recouvrant la structure aval du cadre avant, ladite casquette amont étant articulée autour d'un axe solidaire de la structure fixe et étant associée à des moyens de commande des déplacements de manière que, lors du fonctionnement en inversion de poussée, ladite casquette amont découvre la structure aval du cadre avant qui présente une surface aérodynamique optimisée permettant un guidage optimal du flux inversé vers l'avant de la nacelle en conservant une section totale réduite du puits d'inversion.

En fonction des applications, la casquette amont peut basculer vers l'aval ou vers l'amont de la nacelle et l'entrainement peut être effectué par la porte ou en être indépendant.

Avantageusement, une structure secondaire ou des aubes fixes ou mobiles peuvent être associées à la casquette pour augmenter les performances aérodynamiques d'inversion.

D'autres caractéristiques et avantages de l'invention seront mieux compris à la lecture de la description qui va suivre des modes de réalisation de l'invention, en référence aux dessins annexés sur lesquels :

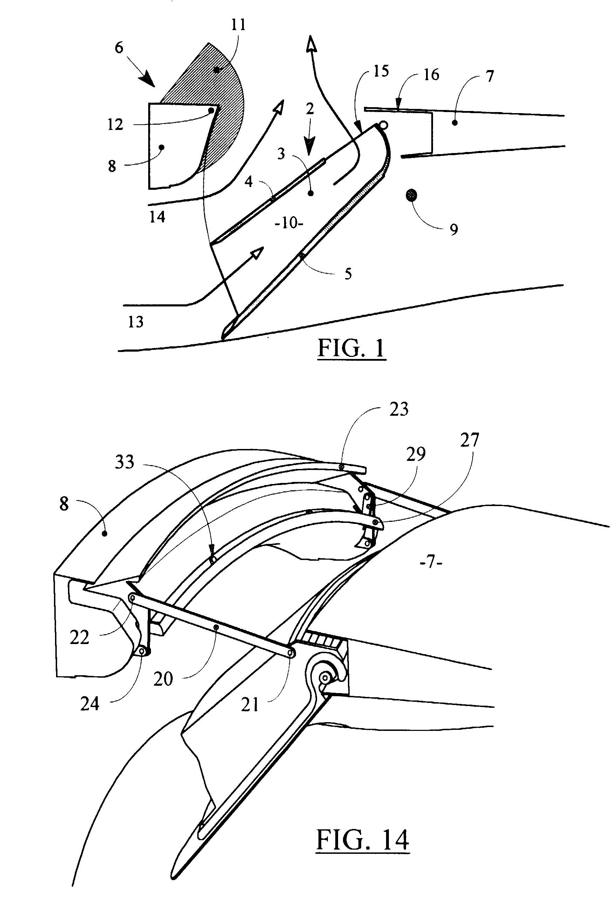

- la figure 1 représente une demi-vue schématique, en coupe longitudinale par un plan passant par l'axe de rotation d'un turboréacteur associé, d'un inverseur de poussée à portes écopes pivotantes, en position ouverte, d'un type connu et qui a fait précédemment l'objet d'un description ;
- la figure 2 représente, dans une vue analogue à celle de la figure 1, en position fermée, un inverseur de poussée à portes écopes selon un mode de réalisation de l'invention ;
- la figure 3 représente le mode de réalisation représenté à la figure 2, en mode jet inversé ;
- la figure 4 représente, dans une vue analogue à celle de la figure 1, en position fermée, un inverseur de poussée à portes écopes selon un autre mode de réalisation de l'invention ;
- la figure 5 représente le mode de réalisation représentée à la figure 4, en mode jet inversé ;
- la figure 6 représente, dans une vue analogue à celle de la figure 1, en position fermée, un inverseur de poussée à portes écopes selon un autre mode de réalisation de l'invention ;
- la figure 7 représente le mode de réalisation représenté à la figure 6, en mode jet inversé ;
- les figures 8 et 9 représentent en perspective le concept défini suivant les figures 2 et 3 ;
- les figures 10 et 11 représentent en perspective le concept défini suivant les figures 2 et 3 et comportant une aube fixe ;
- les figures 12 à 14 représentent en perspective le concept défini suivant les figures 6 et 7 et comportant des aubes mobiles.

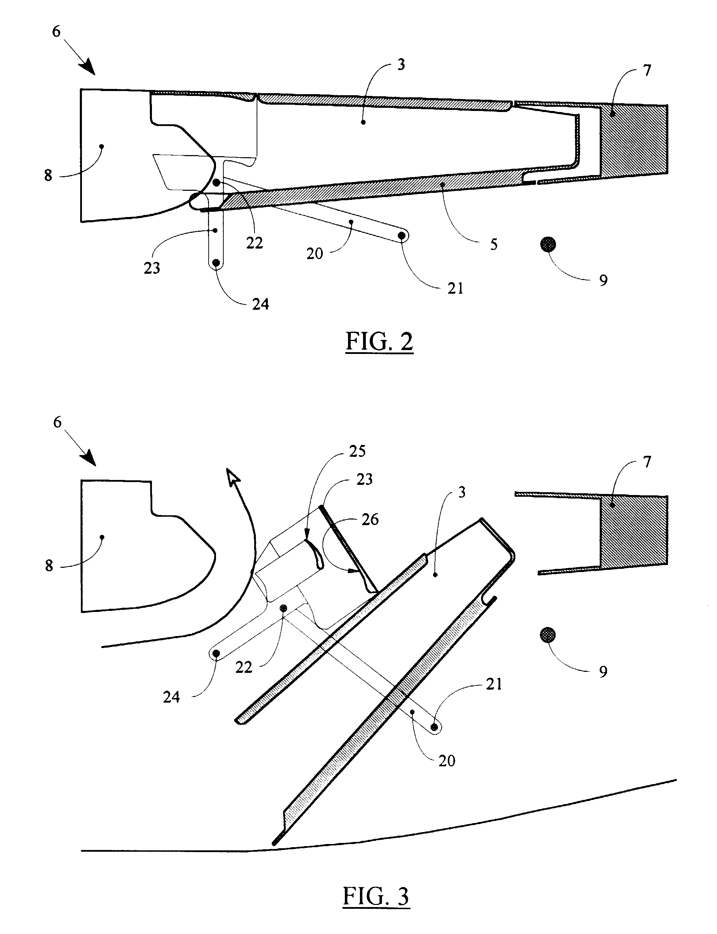

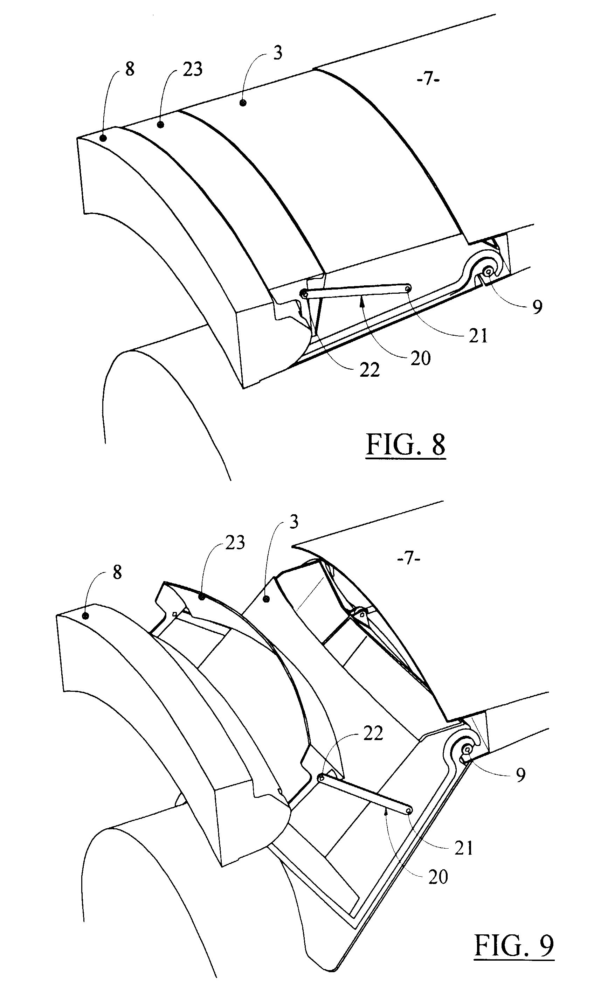

Selon un mode de réalisation de l'invention représenté sur les figures 2, 3, 8 et 9, une porte 3 à tuyère, articulée autour d'un axe de rotation 9 porté par les poutres latérales de la structure fixe 6 d'un inverseur de poussée de turboréacteur double flux, entraîne, par l'intermédiaire d'au moins une bielle latérale 20 articulée en 21 sur la porte 3, une casquette mobile 23 en un point de liaison 22. La casquette 23 s'articule atour d'un axe 24 solidaire de la structure fixe 6, l'aval de la casquette pivotant dans une direction centripète.

En jet direct, l'externe de la caquette 23 forme une partie de la nacelle externe. La surface interne 26 de la casquette 23 est de forme adaptée pour assurer les performances en jet inversé recherchées par l'homme de métier. Avantageusement, un retour en amont interne de la surface peut jouer le rôle de becquet. La longueur de la casquette n'est pas limitée ni en aval ni en amont, elle dépend des dispositions retenues par l'homme de métier quant à son positionnement dans l'espace et par rapport à son environnement. De plus le détourage amont et aval de la casquette peut avoir toutes les dispositions géométriques nécessaires aux performances souhaitées. Le positionnement de la casquette en jet inversé est ajusté pour aider de façon optimale le guidage d'une partie du flux dans une direction choisie.

Le pivot 24 de la casquette 23 peut se situer en partie latérale de la structure fixe ou être positionné en un point quelconque de la structure fixe du cadre 8. La structure de la casquette peut être simple ou comporter, comme représenté sur la figure 3, une structure secondaire 25 qui peut être profilée pour contribuer à l'orientation du flux inversé dans une direction désirée. Cette structure secondaire peut elle même être simple ou composée. L'emplacement, l'orientation et les dimensions des structures secondaires sont définis pour assurer le meilleur compromis entre la tenue structurale et les performances aérodynamiques recherchées.

La position de l'axe pivot 24 de la casquette 23 par rapport à la surface interne 26, en cas de fuite du joint de porte en jet direct, rend, par l'application de la pression aérodynamique exercée sur ladite surface interne, la casquette naturellement pivotante vers l'amont ou vers l'aval de la nacelle. Il est possible d'associer à cet effet à la porte par un positionnement spécifique de l'alignement des deux pivots 21 et 22 de la bielle 20 par rapport au pivot 9 de la porte pour renforcer l'autofermeture de celle-ci.

Pour renforcer les performances d'inversion du flux 14, une aube fixe 32 peut être assujettie à la structure fixe et placée par rapport à la surface du bord de déviation de telle sorte quelle remplisse au mieux sa fonction de redresseur de flux selon les besoins de l'homme de métier.

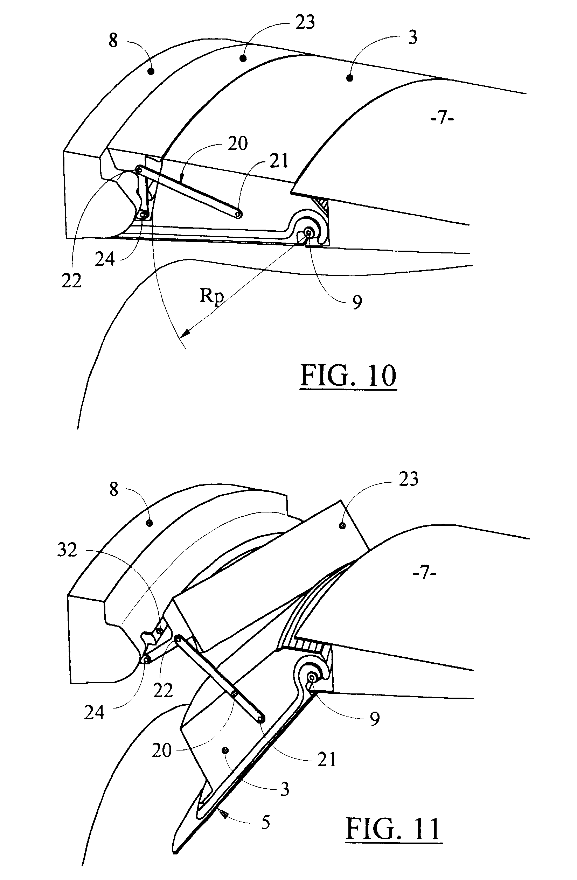

Les figures 10 et 11 montrent un exemple de réalisation de cette installation. Pour ce faire, le rayon Rp du pivot 9 au bord externe amont de la porte 3 doit être inférieur à la distance du pivot 9 de porte à la surface aval de l'aube 32. Le bord aval de la casquette 23 compense alors le raccourcissement de l'amont externe de la porte 3.

On comprend que le concept comporte une certaine souplesse pour lui associer des éléments aérodynamiques sans pour autant entamer la surface interne 5 de la porte 3.

Dans le cas où l'amont de la surface externe de la porte 3 ne peut être suffisamment raccourci pour permettre la manoeuvre de la porte 3 sans que le rayon Rp interfère avec une aube fixe, un ensemble d'éléments déviateur mobile 27 comportant au moins une aube déflectrice peut être installé sur le concept.

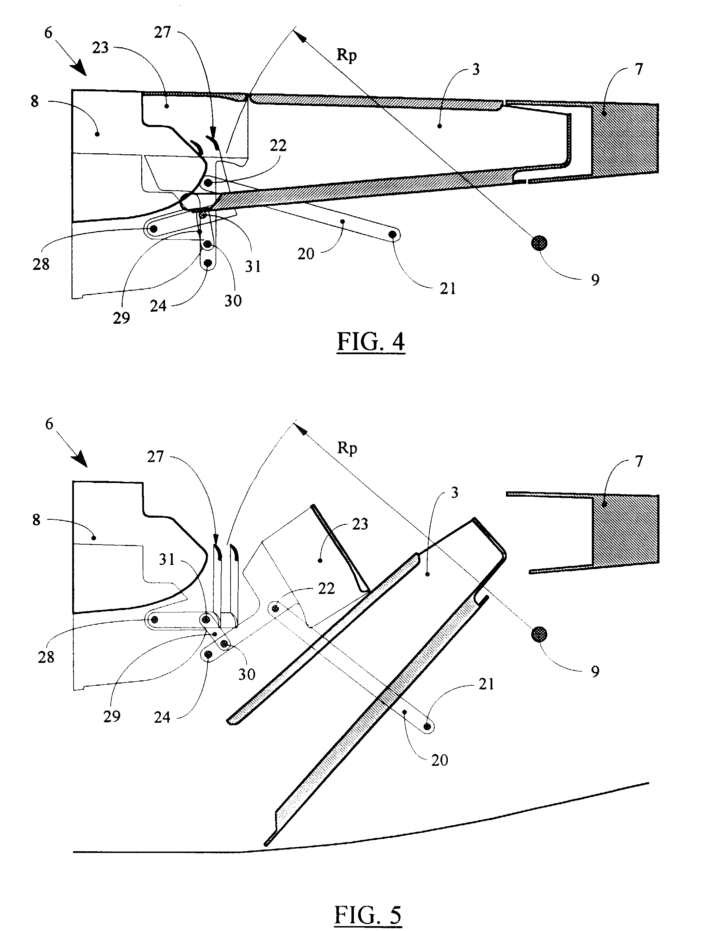

Les figures 4 et 5 en donnent un exemple de réalisation. Avantageusement le principe utilise le déplacement de la casquette 23 pour entrainer l'ensemble déviateur 27. Il est à préciser que la porte 3 peut être l'élément moteur de l'ensemble de déviation 27 particulièrement quand la casquette 23 n'est pas intégré au concept.

Dans l'exemple représenté, les flancs latéraux de la casquette 23 comportent un pivot 30 pour lui associer une biellette 29 reliée en un point 31 à l'élément déviateur 27. L'élément déviateur 27 est lui-même articulé en un point 28 appartenant à la structure fixe 6.

En position jet direct, l'ensemble déviateur 27 est escamoté vers l'amont de la nacelle suffisamment pour ne pas interférer avec la structure de la porte 3 lors du déploiement de celle-ci. La casquette 23 basculant vers l'aval de la nacelle, les organes d'entrainement de l'élément déviateur 27 sont disposés de manière à commander le déplacement de l'élément déviateur 27 vers l'aval de la nacelle. Il est à noter que la définition de la structure même de l'élément déviateur est du type connu de l'homme de métier et que toutes les dispositions aérodynamiques et structurales connues sont applicables pour ce cas.

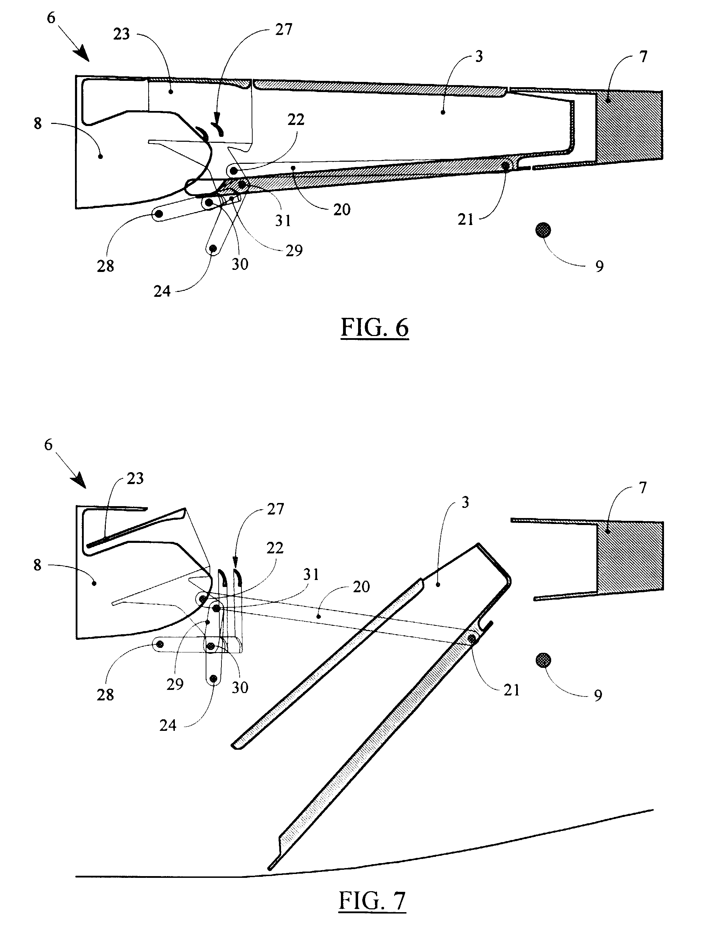

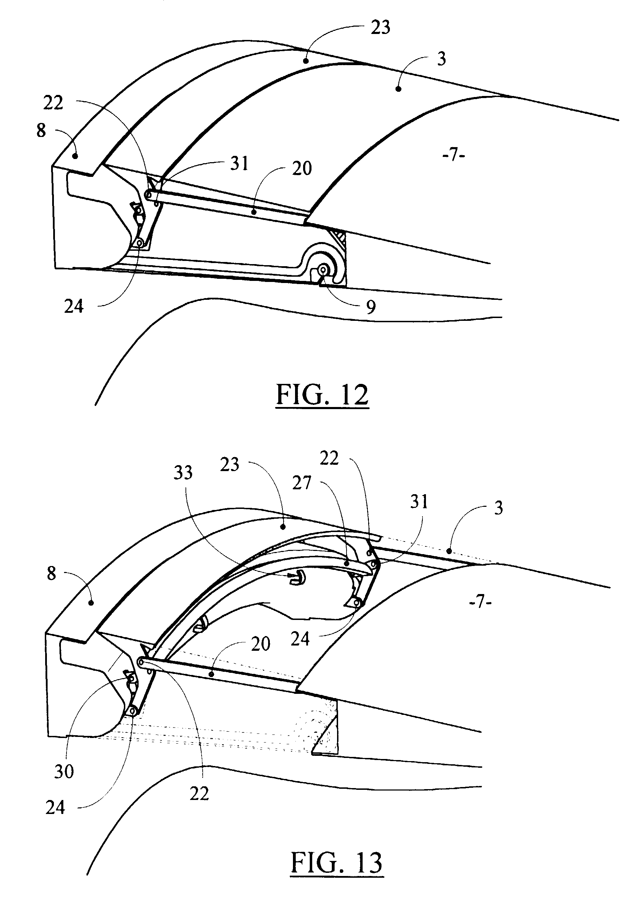

Les figures 6, 7 et 12 à 14 montrent un exemple de réalisation d'un autre mode de l'invention qui permet de ne pas positionner la surface interne de la casquette 23 dans le flux d'inversion. De façon avantageuse, cette disposition peut permettre de ne pas mettre dans le vent la surface externe de la casquette, la casquette, en position escamotée, ne débordant pas de l'enveloppe de la surface externe de la nacelle. La disposition générale des éléments d'entrainement est similaire au concept d'entrainement de la casquette vers l'aval de la nacelle, seul l'emplacement géométrique des bielles 20 et 29 par rapport aux éléments mobiles est différent ceci pour permettre l'escamotage d'une part de la casquette 23 vers l'amont de la nacelle et le pivotement de l'élément déviateur 27 vers l'aval de la nacelle d'autre part lors de la manoeuvre d'ouverture de la porte écope 3. Avantageusement, la partie aval de la casquette 23 peut être optimisée pour assurer la continuité des lignes de l'aval du cadre avant 8 en jet inversé.

Pour minimiser la déflexion que peuvent subir les éléments déviateurs 27 par le flux d'inversion, au moins un tampon 32 peut être associé à la structure fixe. Son encombrement permet le libre débattement de la porte 3. La forme de l'aubage et la cinématique de l'élément déviateur 27 font que l'élément mobile est fortement dégageant par rapport au tampon 32 ce qui lui permet d'épouser au mieux la forme de l'aubage et donc de renforcer efficacement la tenue structurale de l'aubage.

La casquette 23 peut être manoeuvrée indépendamment de la porte 3 par tout système moteur connu de l'homme de métier et peut être pilotée soit simultanément, séquentiellement, en avance ou bien retardée par rapport à l'ouverture de la porte. Dans ce cas, les organes moteurs sont placés en partie latérale de la casquette ou sur le cadre avant 8.

Dès lors il est techniquement envisageable de réaliser l'entraînement de la porte 3 par le biais de la casquette selon l'arrangement représenté précédemment.

Avantageusement le déplacement de la casquette 23 peut être réglé pour optimiser la sortie du débit d'inversion pendant la phase d'ouverture pour éviter tout problème de fonctionnement du moteur.

## Revendications

1. Inverseur de poussée de turboréacteur à double flux comportant des portes creuses pivotantes (3), constituant en position fermée, lors d'un fonctionnement en jet direct, une partie du capotage extérieur de la nacelle et après pivotement sous l'action d'un moyen de commande des déplacements, le bord amont de porte pénétrant dans la conduit de flux, les portes (3) constituant des obstacles de déviation de flux en dégageant un passage dans le capotage extérieur, lors d'un fonctionnement en inversion de poussée, au moins une partie du flux dévié empruntant le conduit interne (10) ou tuyère de la porte (3) formant écope, comportant en outre une structure fixe constituée d'une partie amont (6), située en amont des portes (3) et comportant un cadre avant (8), d'une partie aval (7) située en aval des portes (3) et de poutres longitudinales fixes qui relient les parties amont (6) et aval (7) caractérisé en ce que une partie mobile formant casquette (23) est disposée, en jet direct, entre le bord amont de la porte (3) et la structure fixe amont (6) recouvrant la structure aval du cadre avant (8), ladite casquette amont (23) étant articulée sur la structure fixe et étant associée à des moyens de commande de déplacement de manière que, lors du fonctionnement en inversion de poussée, ladite casquette amont (23) découvre la structure aval du cadre avant (8) qui présente une surface aérodynamique optimisée permettant un guidage optimal du flux inversé vers l'avant de la nacelle en conservant une section totale réduite du puits d'inversion.

2. Inverseur de poussée de turboréacteur à double flux selon la revendication 1, caractérisé en ce que ladite casquette amont (23) est reliée à la porte (3) par au moins une bielle (20) d'entrainement à extrémités articulées.

3. Inverseur de poussée de turboréacteur à double flux selon l'une des revendications 1 ou 2 caractérisé en ce que lors de l'ouverture de la porte (3), la casquette amont (23) bascule vers l'aval de la nacelle, le bord aval de la casquette (23) pivotant dans une direction centripète par rapport à l'axe longitudinal de la nacelle.

4. Inverseur de poussée de turboréacteur à double flux selon l'une quelconque des revendications 1 à 3 caractérisé en ce que la casquette amont (23) est associée à au moins une structure secondaire (25) profilée de manière à contribuer à l'orientation recherchée du flux inversé.

5. Inverseur de poussée de turboréacteur à double flux selon l'une des revendications 1 ou 2 caractérisé en ce que lors de l'ouverture de la porte (3), la casquette amont (23) bascule vers l'amont de la nacelle, la partie amont de la casquette entrant dans un espace formant logement ménagé sur le cadre avant (8) de la structure fixe amont (4) et la casquette (23) ne débordant pas de l'enveloppe de la surface externe de la nacelle.

6. Inverseur de poussée de turboréacteur à double flux selon l'une quelconque des revendications 1 à 5 caractérisé en ce que la surface aval du cadre avant (8) de la structure fixe amont (6) porte une excroissance profilée en forme d'aube fixe (32), le bord externe amont de la porte (3) étant aménagé pour permettre l'ouverture de la porte (3) et le bord aval de la casquette amont (23) étant disposé en continuité aérodynamique avec la surface externe de la porte (3) en jet direct.

7. Inverseur de poussée de turboréacteur à double flux selon l'une quelconque des revendications 1 à 5 caractérisé en ce qu'un élément déviateur mobile (27) comportant au moins une aube déflectrice est adjoint, disposé en jet direct dans l'espace interne ménagé entre le cadre avant (8) de la structure fixe amont (6) et la porte (3) et se plaçant lors de l'ouverture de la porte (3) dans le flux dévié entre la porte (3) et la structure fixe amont (6).

8. Inverseur de poussée de turboréacteur à double flux selon la revendication 7 caractérisé en ce que l'élément déviateur mobile (27) est relié à la structure fixe amont (6) par une articulation (28) et est entrainé par le basculement de la casquette amont (23) au moyen d'au moins une biellette de liaison (29) reliant l'élément déviateur mobile (27) et la casquette amont (23).

9. Inverseur de poussée de turboréacteur à double flux selon la revendication 7 caractérisé en ce que les déplacements de l'élément déviateur mobile (27)sont obtenus au moyen d'une liaison à la porte (3).

10. Inverseur de poussée de turboréacteur à double flux selon l'une quelconque des revendications 7 à 9 caractérisé en ce qu'au moins un tampon (33) solidaire de la structure fixe amont (6) est disposé entre la structure fixe amont (6) et au moins une aube mobile du déviateur (27).

11. Inverseur de poussée de turboréacteur à double flux selon la revendication 1 caractérisé en ce que les moyens de commande de déplacement de la casquette amont (23) sont indépendants de la porte (3).

12. Inverseur de poussée de turboréacteur à double flux selon la revendication 1 caractérisé en ce que les déplacements de la porte (3) sont obtenues grâce aux moyens de commande de déplacement de la casquette amont (23).
